# EUROPEAN PATENT APPLICATION

(11) **EP 4 257 286 A1**
(43) Date of publication of application: **11.10.2023**
(21) Application number: 22305457.8
(22) Date of filing: 05.04.2022
(51) Int. Cl.: B24B 13/06, B24B 13/00, G02C 7/00, G06N 7/00

(54) **COMPUTER-IMPLEMENTED METHOD AND MANUFACTURING SYSTEM FOR MANUFACTURING BY MACHINING AN OPHTHALMIC DEVICE**

(71) Applicant: Essilor International, 94220 Charenton-Le-Pont (FR)
(72) Inventor: CASTRO MARTINEZ, Luis, 94100 Saint Maur des Fosses (FR); MARTIN, Luc, 91470 Forges les Bains (FR); MOINE, Jérôme, 94410 Saint Maurice (FR); PINAULT, Sebastien, 91310 Longpont sur Orge (FR); BESSONNET, Stephane, 94000 Creteil (FR); KRESS, Pierre, 92160 Antony (FR)
(74) Representative: Santarelli

(57) **Abstract**

The disclosure relates to a method for manufacturing by machining an ophthalmic device, comprising selecting (100) an initial ophthalmic surface of the ophthalmic device intended to be manufactured, selecting (110) a manufacturing method intended to be implemented for machining the ophthalmic device and which introduces a reproducible surface defect, providing (120) a surface defect value which is function of the initial ophthalmic surface and reproducible surface defect and which would be introduced if the initial ophthalmic surface were produced by said manufacturing method, transforming (130) said initial ophthalmic surface into a transformed ophthalmic surface by compensating said surface defect, machining (150) by said manufacturing method the transformed ophthalmic surface in order to obtain an ophthalmic surface which substantially conforms to the initial ophthalmic surface, wherein said manufacturing method comprises blocking (140) the ophthalmic device to be machined and the reproducible surface defect is a deformation defect which is due to the blocking the ophthalmic device when a face of which is machined for obtaining the ophthalmic surface.

## Description

### FIELD OF THE DISCLOSURE

The disclosure relates to a method for manufacturing by machining an ophthalmic device.

The disclosure also relates to a command and control unit including system elements configured to run a computer program in order to implement such a method for manufacturing by machining an ophthalmic device, and to a manufacturing system comprising such a command and control unit and configured for carrying out such a manufacturing method.

The disclosures also relates to a computer program including instructions configured to implement such a manufacturing method, when said computer program is run by a computer, and to a client-server communication interface for transferring to a remote computer at least a manufacturing data which is determined by a computer program that implements each of the steps of the manufacturing method, when said computer program is run in a command and control unit.

### BACKGROUND ART

European patent EP 2 790 876 relates to a method for transforming an initial progressive ophthalmic surface which has to be manufactured by a manufacturing method, the transformation method comprising:
- a step of selecting a manufacturing method intended to be implemented, in which said manufacturing method introduces a reproducible surface defect,
- a step of selecting a predictive model of said reproducible surface defect,
- a step of selecting an initial progressive ophthalmic surface S intended to be manufactured,
- a step of determining, during which there is determined, by means of said predictive model, a surface defect value which would be introduced if the initial progressive ophthalmic surface were produced by said manufacturing method, and
- a transformation step during which said initial progressive ophthalmic surface is transformed into a transformed progressive ophthalmic surface by compensating the defect value determined during the step, such that the subsequent manufacture of the transformed ophthalmic surface by said manufacturing method makes it possible to obtain a progressive ophthalmic surface which substantially conforms to the initial progressive ophthalmic surface.

The surface defect may be introduced by a surfacing method, a polishing method, or by a combination of a surfacing and a polishing, and the surface defect is a surface addition and/or mean sphere and/or cylinder defect and/or a polishing ring defect.

The above method relates in particular to the correction of surface defects introduced in a reproducible manner by a given manufacturing method, and makes it possible to enhance the progressive surface production precision, is simple to implement, suits to all types of progressive surfaces and ensures a good efficiency.

This surface transformation method thus implements a predictive model of a reproducible surface defect which has been previously established and is implemented prior to the actual manufacture of the progressive surface.

### SUMMARY OF THE DISCLOSURE

The disclosure is directed to a method for manufacturing by machining an ophthalmic device, carrying out a transformation step on the type disclosed above, which is easy and convenient to implement.

The disclosures accordingly provides, according to a first aspect, a method for manufacturing by machining an ophthalmic device, comprising:
- a step of selecting an initial ophthalmic surface of the ophthalmic device intended to be manufactured by machining;
- a step of selecting a manufacturing method intended to be implemented for machining the ophthalmic device, in which said manufacturing method introduces a reproducible surface defect;
- a step of providing a surface defect value which is function of the initial ophthalmic surface and of the reproducible surface defect and which would be introduced if the initial ophthalmic surface were produced by said manufacturing method;
- a step of transforming said initial ophthalmic surface into a transformed ophthalmic surface by compensating said surface defect; and
- a step of machining by said manufacturing method the transformed ophthalmic surface in order to obtain an ophthalmic surface which substantially conforms to the initial ophthalmic surface;
wherein said manufacturing method comprises a step of blocking the ophthalmic device to be machined and the reproducible surface defect is a deformation defect which is due to the blocking the ophthalmic device when a face of which is machined for obtaining the ophthalmic surface which substantially conforms to the initial ophthalmic surface.

According to the disclosure, the deformation phenomena generated during the machining of the ophthalmic lens, also called surfacing process, can be compensated and an optical power error, for instance a power deviation, generated by the deformation phenomena can be limited, thus providing a more accurate ophthalmic device.

Advantageous and convenient features of the manufacturing method are described below.

The initial ophthalmic surface may correspond to a predetermined optical function.

The manufacturing method may comprise a step of blocking one face and/or an outline portion of the ophthalmic device to be machined and the reproducible surface defect is a deformation defect which is due to the blocking of said one face and/or outline portion of the ophthalmic device when another opposite face of the latter is machined, the another opposite face being the transformed ophtalmic surface.

The reproducible surface defect is a deformation defect which is generated on at least one of the faces of the ophthalmic device and optionally on an outline portion of the ophthalmic device.

The reproducible surface defect is function of at least one parameter amongst a clamping force and/or a bonding force applied on the ophthalmic device when blocked, and/or internal material constraints modified in the ophthalmic device during the machining thereof.

The surface defect value is function of at least one intrinsic parameter amongst a Poisson's ratio and/or a Young's modulus of at least one of a blocking device and/or the ophthalmic device.

The surface defect value is further function of the geometrical characteristics and/or of the optical function of the initial ophthalmic surface.

The step of providing a surface defect value comprises a step of selecting a predictive compensation model of said reproducible surface defect, and a step of determining the surface defect value by means of said predictive compensation model.

The predictive compensation model is predetermined as a static-model and is loaded when the manufacturing method is carried out.

The predictive compensation model is determined dynamically during the manufacturing method, which comprises a step of measuring deformation values of the ophthalmic device when blocked, corresponding to the reproducible surface defect.

Predictive compensation models are built by collecting data amongst a clamping force and/or a bonding force applied on an ophthalmic device when blocked, and/or internal material constraints modified in the ophthalmic device during the machining thereof, and/or a Poisson's ratio and/or a Young's modulus of at least one of a blocking device and/or the ophthalmic device, by estimating reproducible surface defects as a function of the data collected, by generating compensation models as a function of the reproducible surface defects in order to define surface defect values, and by performing tests by machining a plurality of ophthalmic devices in order to calibrate the compensation models generated and thus to obtain the predictive compensation models.

The initial ophthalmic surface may be an initial progressive ophthalmic surface, or toric surface or others surfaces.

The surface defect value is representative of a gradient of curvature and/or a ripple on the initial ophthalmic surface.

The disclosures also provides, according to a second aspect, a command and control unit including system elements configured to run a computer program in order to implement each of the steps of the method for manufacturing by machining an ophthalmic device as described above.

The disclosures further provides, according to a third aspect, a manufacturing system comprising a machining tool, a blocking tool and a command and control unit as described above, the system being configured for carrying out such a manufacturing method.

The disclosures also provides, according to a fourth aspect, a computer program including instructions configured to implement each of the steps of the method for manufacturing by machining an ophthalmic device as described above, when said computer program is run by a computer.

The disclosures further provides, according to a fifth aspect, a client-server communication interface for transferring to a remote computer at least manufacturing data, such as the surface defect value, which is determined by a computer program that implements at least some steps of the method for manufacturing by machining an ophthalmic device as described above, when said computer program is run in a command and control unit, the remote computer implementing the other steps of such method for manufacturing.

### BRIEF DESCRIPTION OF THE DRAWINGS

The description of the disclosure now continues with a detailed description of advantageous embodiments given hereinafter by way of nonlimiting example and with reference to the appended drawings.
Figure 1 schematically depicts a manufacturing system such as a digital surfacing machine, configured to carry out steps of a method for manufacturing an ophthalmic device, according to the disclosure.
Figure 2 diagrammatically shows a client-server communication interface comprising system parts configured for transferring at least one configuration parameter determined by the method according to the disclosure to a remote data processing system.
Figure 3 is a block diagram illustrating operating steps of the method for manufacturing an ophthalmic device according to the disclosure and thanks to the digital surfacing machine and/or to the client-server communication interface illustrated in Figures 1 and 2.
Figure 4 illustrates the ophthalmic device and a blocking device configured to be temporarily and fixedly connected to the ophthalmic device.
Figure 5 is a block diagram illustrating a step of providing a surface defect value denoted in Figure 3.

### DETAILED DESCRIPTION OF EXAMPLE EMBODIMENTS

The disclosure is directed to a method for manufacturing an ophthalmic device comprising a machining step.

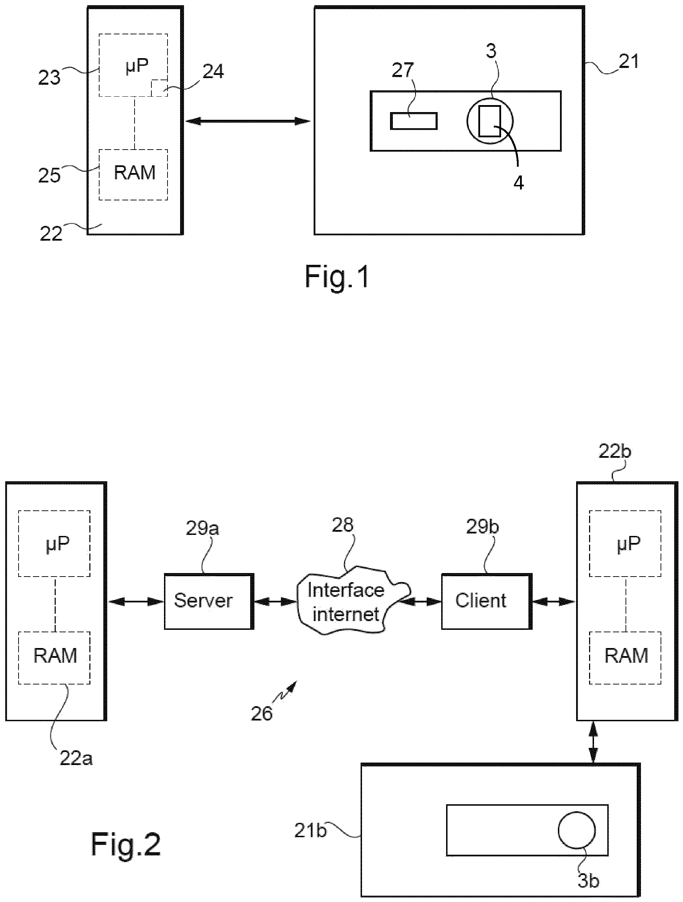

Figure 1 illustrates a manufacturing system configured to carry out at least a machining step of an initial ophthalmic surface corresponding for instance to a predetermined optical function of an ophthalmic device 3 which is temporarily and fixedly maintained by a blocking device 4 during the machining.

The system comprises a manufacturing machine 21 and system parts generally formed by at least one command and control unit 22 configured to communicate with a data processing system (or control unit) of the machine 21 and configured to run a computer program having instructions configured to implement at least the machining step of the method, when said computer program is run by a computer.

The machine 21 is here a numerical-control "free-form" turning machine 1, numerical control denoting the set of equipment and software, the function of which is to give movement instructions to all the elements of the machine 1.

The machine 1 comprises a machining tool 27, for instance a moveable machining arm on which is mounted a cutting tool provided with a cutting edged, and a data processing system or a control unit (not shown) configured for controlling the tool 27.

The command and control unit 22 comprises a microprocessor 23 having a memory 24, in particular a non-volatile memory, allowing it to load and store the computer program, also called software, which when it is executed in the microprocessor 23, allows the implementation of method according to the disclosure.

This non-volatile memory 24 is for example of the ROM ("read only memory") type.

The command and control unit 22 further comprises a memory 25, in particular a volatile memory, allowing data to be stored during the execution of the software and the implementation of the method.

This volatile memory 25 is for example of the RAM or EEPROM type (respectively "random access memory" and "electrically erasable programmable read only memory").

The command and control unit may be only at least partially integrated into the machine. In other words, the control unit may be arranged in part, or in whole, outside the machine.

The command and control unit can form at least partially a part of the machine and may comprise one or a plurality of command and control modules located inside and/or outside the machine.

In the case where the part which is machined is directly the ophthalmic device, the machine 21 can also be configured for polishing the faces and/or for edging the peripheral edge in order to form the ophthalmic lens.

The command and control unit 22 is configured to command and control at least some of the steps of the manufacturing method described below.

Figure 2 shows a client-server communication interface 26 comprising for instance a so-called supplier side 29a and another, so-called client side 29b, and these two sides communicating via an internet interface 28.

The supplier side comprises a server 29a linked to a data processing system or a command and control unit 22a of the same type as that in Figure 1, this server 29a being configured to communicate with the internet interface 28.

The client side 29b is configured to communicate with the internet interface 28, and is linked to a data processing system or a command and control unit 22b of the same type as that of the supplier side.

Further, the command and control unit 22b on the client-side is linked to a manufacturing machine 21b of the same type as that in Figure 1 for manufacturing at least the first face 3b of an ophthalmic substrate.

For instance, the command and control unit 22b on the client-side is configured for receiving by a user some parameters about the ophthalmic device to be machined and about the manufacturing method intended to be implemented for machining the ophthalmic device, in which said manufacturing method introduces a reproducible surface defect.

The reproducible surface defect is a deformation defect which is due to the blocking the ophthalmic device when a face of which is machined for obtaining the ophthalmic surface which substantially conforms to the initial ophthalmic surface.

For instance, the parameters about the ophthalmic device may include geometrical characteristics and/or optical function of an initial ophthalmic surface intended to be manufactured and/or at least one information representative of intrinsic parameter of a material of the ophthalmic device.

For instance, the parameters about the manufacturing method includes information representative of the blocking device 4, such as a clamping force and/or a bonding force etc., and are representative of a reproducible surface defect introduced.

The command and control unit 22b on the client-side, using the internet 28 and server 29a interface, sends the data received to the command and control unit 22a on the supplier-side for the determination of the manufacturing file and operational parameters.

The command and control unit 22a on the supplier-side executes the computer program that it contains in order to implement for instance a step of determination of a surface defect value which is function of the initial ophthalmic surface and of the reproducible surface defect and which would be introduced if the initial ophthalmic surface were produced by said manufacturing method and/or a step of transforming the initial ophthalmic surface into a transformed ophthalmic surface by compensating said surface defect.

Using the server 29a and the internet interface 28, the command and control unit 22a on the supplier-side sends the manufacturing file and operational parameters, representative in particular to the surface defect value and/or to transformed ophthalmic surface, to the command and control unit 22b on the client side.

The command and control unit 22b on the client side is here configured to execute software for implementing the other steps of the method for manufacturing by machining the ophthalmic device using the manufacturing file and operational parameters, representative in particular to the surface defect value and/or to transformed ophthalmic surface, in order to machine the transformed ophthalmic surface so that to obtain the ophthalmic surface which substantially conforms to the initial ophthalmic surface thanks to the manufacturing system 21b.

In variant, the step of transforming the initial ophthalmic surface into a transformed ophthalmic surface by compensating said surface defect can be carried out by the command and control unit 22b on the client side.

In another variant, the manufacturing system can be located on the supplier side so that the command and control unit 22a on the supplier side is further configured to machine the transformed ophthalmic surface so that to obtain the ophthalmic surface which substantially conforms to the initial ophthalmic surface thanks to a manufacturing system.

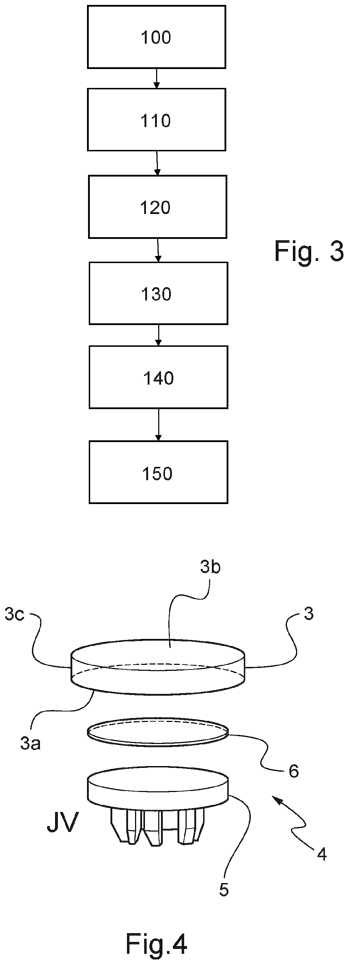

Figure 3 shows the main steps of the method for manufacturing carried out by the manufacturing system and/or client-server communication interface 26 described above, which comprises:
- a step 100 of selecting an initial ophthalmic surface of the ophthalmic device intended to be manufactured by machining, the initial ophthalmic surface corresponding for instance to a predetermined optical function;
- a step 110 of selecting a manufacturing method intended to be implemented for machining the ophthalmic device, in which the manufacturing method introduces a reproducible surface defect which is a deformation defect which is due to the blocking the ophthalmic device when a face of which is machined for obtaining the ophthalmic surface which substantially conforms to the initial ophthalmic surface;
- a step 120 of providing a surface defect value which is function of the initial ophthalmic surface and of the reproducible surface defect and which would be introduced if the initial ophthalmic surface were produced by said manufacturing method;
- a step 130 of transforming the initial ophthalmic surface into a transformed ophthalmic surface by compensating said surface defect;
- a step 140 of blocking the ophthalmic device to be machined thanks to the blocking device 4; and
- a step 150 of machining by the manufacturing method the transformed ophthalmic surface in order to obtain an ophthalmic surface which substantially conforms to the initial ophthalmic surface.

Figure 4 shows in more detail the blocking device 4 according to an embodiment and its cooperation with the ophthalmic device 3.

In particular, the blocking device 4 here comprises a main part 5, also called block member, which can be made for instance of metal or of plastic, and an intermediary part 6, which can be formed by a protective film and/or an adhesive film.

In variant, the main part can be made by a permanent part made of metal and a non-permanent part made of fuse metal.

The blocking device 4 is configured to be temporarily and fixedly connected to the ophthalmic device at least during the machining step of the transformed ophthalmic surface.

The blocking device 4 is here configured to be connected to a second face 3a of the ophthalmic device 3, which is opposite to the first face 3b thereof.

In the present embodiment, the first face 3b is also called a rear face while the second face 3a is also called a front face.

The rear face can be located in regard of an eye of a wearer when the ophthalmic device is worn, while the front face can be located in regard of an object when the ophthalmic device is worn, or inversely.

In variants, the blocking device 4 can be configured to be connected to an outline portion 3c which joins both first face 3b and second face 3a, or both the second face 3a and the outline portion 3c, or the second face 3a, or both the second face 3a and the outline portion 3c.

In another variant, the blocking device 4 can be configured to be connected successively to the first face 3b and the second face 3a, in combination or not with the outline portion 3c.

Therefore, the reproducible surface defect is in particular a deformation defect which is due to the blocking of at least one of the first face 3b, second face 3a and outline portion 3c said when the respective second face 3a and first face 3b is machined so that to correspond to the transformed ophtalmic surface.

Indeed, the blocking may generate a clamping force and/or a bonding force on the ophthalmic device 3, inducing internal material constraints therein.

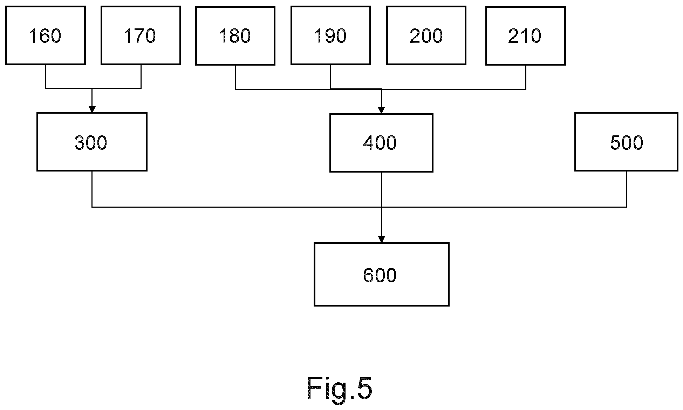

Figure 5 shows in more detail a determination of the surface defect value.

The method may comprise a step 160 of receiving a value representative of the geometrical characteristics of the initial ophthalmic surface to obtain.

The method may comprise a step 170 of receiving a value representative of the optical function which corresponds for instance to which correspond here for instance to an initial progressive ophthalmic surface to obtain.

The method may comprise a step 300 of determining referenced parameters of the initial ophthalmic surface as a function of at least one of the values representative of the geometrical characteristics and optical function.

The method may comprise a step 180 of receiving a value representative of a clamping force applied by the blocking device 4 on the ophthalmic device 3 when blocked.

The method may comprise a step 190 of receiving a value representative of a bonding force applied by the blocking device 4 on the ophthalmic device 3 when blocked.

The method may comprise a step 200 of receiving values representative of internal material constraints modified in the ophthalmic device 3 during the machining thereof. These internal material constraints can be defined by a Poisson's ratio and/or a Young's modulus of the ophthalmic device 3.

The method may comprise a step 210 of receiving values representative of internal material constraints transmitted to the ophthalmic device 3 by the blocking device 4 during the blocking step. These internal material constraints can be defined by a Poisson's ratio and/or a Young's modulus of the blocking device 4.

The method may comprise a step 400 of determining the reproducible surface defect as a function of at least one of the values representative of the clamping force and/or bonding force applied by the blocking device 4 and/or internal material constraints modified in the ophthalmic device 3 because of both the blocking step and machining step.

The method may comprise the step 500 of selecting a predictive compensation model of the reproducible surface defect.

The method may comprise the step 600 of determining the surface defect value depending on, said otherwise as a function of, at least one of the reproducible surface defect determined in step 400 and referenced parameters of the initial ophthalmic surface determined in step 300, and optionally furthermore by means of the predictive compensation model.

The surface defect value is thus representative of a gradient of curvature and/or a ripple on the initial ophthalmic surface, said otherwise representative of a deformation relative to the referenced parameters of the initial ophthalmic surface.

The predictive compensation model of the reproducible surface defect selected in step 500 may be determined dynamically during the manufacturing method, which comprises a step of measuring deformation values of the ophthalmic device when blocked, corresponding to the reproducible surface defect.

In variant, the predictive compensation model of the reproducible surface defect selected in step 500 may be predetermined as a static-model and is loaded when the manufacturing method is carried out.

In particular, a plurality of number of predictive compensation models can be built by collecting data like those received in steps 160 to 210 described above, namely amongst a clamping force and/or a bonding force applied on an ophthalmic device when blocked, and/or internal material constraints modified in the ophthalmic device during the machining thereof, and/or a Poisson's ratio and/or a Young's modulus of at least one of a blocking device and/or ophthalmic device, then by estimating reproducible surface defects as a function of the data collected, next by generating compensation models as a function of the reproducible surface defects in order to define surface defect values, and then by performing tests by machining a plurality of ophthalmic devices in order to calibrate the compensation models generated and thus to obtain the predictive compensation models.

It is to be noted that the predictive compensation model of the reproducible surface defect can be determined also by taking into account a parameter of viscosity of the material, in particular when the ophthalmic device is made from plastic and especially from polymers.

According to the disclosure, the deformation phenomena generated during the machining of the ophthalmic device, also called surfacing process, can thus be compensated and an optical power error, for instance a power deviation, generated by the deformation phenomena can be limited, thus providing a more accurate ophthalmic device.

In order to compensate the deformation phenomena, the method according to the disclosure allows to take into account of the type of blocking device and the effects thereof on the ophthalmic device, in addition to the material and geometrical characteristics of the ophthalmic device, including base, thickness and diameter of thereof.

It is to be noted also that the clamping force described above is generally generated, if any, by a clamping device of the manufacturing system and in which is mounted the blocking device together with the ophthalmic device.

The clamping force may also be representative of a holding force generated by a vacuum device able to maintain in position the ophthalmic device.

It is to be noted that the parameters relating to the type of blocking device and which are taken into account may also include for instance the geometry and in particular the diameter and height of the block member, and other parameters such as the time of blocking and the temperature of blocking if any, and the vacuum pressure if any.

It is to be noted also that the deformation phenomena mainly applies during a machining step commonly called a roughing phase carried out by a milling, because a huge volume of material can be removed very fast, and leaving for instance a small thickness for a fine cutting.

It should be noted more generally that the disclosure is not limited to the examples described and represented.

## Claims

1. A method for manufacturing by machining an ophthalmic device (3), comprising:
- selecting (100) an initial ophthalmic surface of the ophthalmic device intended to be manufactured by machining;
- selecting (110) a manufacturing method intended to be implemented for machining the ophthalmic device, in which said manufacturing method introduces a reproducible surface defect;
- providing (120) a surface defect value which is function of the initial ophthalmic surface and of the reproducible surface defect and which would be introduced if the initial ophthalmic surface were produced by said manufacturing method;
- transforming (130) said initial ophthalmic surface into a transformed ophthalmic surface by compensating said surface defect; and
- machining (150) by said manufacturing method the transformed ophthalmic surface in order to obtain an ophthalmic surface which substantially conforms to the initial ophthalmic surface;
wherein said manufacturing method comprises blocking (140) the ophthalmic device to be machined and the reproducible surface defect is a deformation defect which is due to the blocking the ophthalmic device when a face of which is machined for obtaining the ophthalmic surface which substantially conforms to the initial ophthalmic surface.

2. Method according to claim 1, comprising blocking (140) one face (3a, 3b) and/or an outline portion (3c) of the ophthalmic device (3) to be machined and the reproducible surface defect is a deformation defect which is due to the blocking of said one face and/or outline portion of the ophthalmic device when another opposite face of the latter is machined, the another opposite face being the transformed ophthalmic surface.

3. Method according to claim 2, wherein the reproducible surface defect is a deformation defect which is generated on at least one of the faces (3a, 3b) of the ophthalmic device (3) and optionally on the outline (3c) of the ophthalmic device.

4. Method according to any one of claims 1 to 3, wherein the reproducible surface defect is function of at least one parameter amongst a clamping force and/or a bonding force applied on the ophthalmic device (3) when blocked, and/or internal material constraints modified in the ophthalmic device during the machining thereof.

5. Method according to claim 4, wherein the surface defect value is function of at least one intrinsic parameter amongst a Poisson's ratio and/or a Young's modulus of at least one of a blocking device (4) and/or the ophthalmic device (3).

6. Method according to claim 5, wherein the surface defect value is further function of geometrical characteristics and/or of a predetermined optical function of the initial ophthalmic surface.

7. Method according to any one of claims 1 to 6, wherein providing a surface defect value comprises selecting (500) a predictive compensation model of said reproducible surface defect, and determining (600) the surface defect value by means of said predictive compensation model.

8. Method according to claim 7, wherein the predictive compensation model is predetermined as a static-model and is loaded when the manufacturing method is carried out.

9. Method according to claim 8, wherein the predictive compensation model is determined dynamically during the manufacturing method, which comprises measuring deformation values of the ophthalmic device (3) when blocked, corresponding to the reproducible surface defect.

10. Method according to any one of claims 1 to 9, wherein predictive compensation models are built by collecting data amongst a clamping force and/or a bonding force applied on an ophthalmic device when blocked, and/or internal material constraints modified in the ophthalmic device during the machining thereof, and/or a Poisson's ratio and/or a Young's modulus of at least one of a blocking device and/or the ophthalmic device, by estimating reproducible surface defects as a function of the data collected, by generating compensation models as a function of the reproducible surface defects in order to define surface defect values, and by performing tests by machining a plurality of ophthalmic devices in order to calibrate the compensation models generated and thus to obtain the predictive compensation models.

11. Method according to any one of claims 1 to 10, wherein the surface defect value is representative of a gradient of curvature and/or a ripple on the initial ophthalmic surface.

12. A command and control unit including system elements configured to run a computer program in order to implement a method for manufacturing by machining an ophthalmic device (3) according to any one of claims 1 to 11.

13. A manufacturing system comprising a machining tool (27), a blocking tool (4) and a command and control unit (22) according to claim 12, the system being configured for carrying out said manufacturing method.

14. A computer program including instructions configured to implement a method for manufacturing by machining an ophthalmic device according to any one of claims 1 to 11, when said computer program is run by a computer.

15. A client-server communication interface for transferring to a remote computer at least manufacturing data, such as the surface defect value, which is determined by a computer program that implements at least a part of the method for manufacturing by machining an ophthalmic device according to any one of claims 1 to 11, when said computer program is run in a command and control unit, the remote computer implementing the other parts of said method for manufacturing.
